# EUROPEAN PATENT APPLICATION

(11) **EP 1 752 996 A2**
(43) Date of publication of application: **14.02.2007**
(21) Application number: 05257366.4
(22) Date of filing: 30.11.2005
(51) Int. Cl.: H01F 10/32, H01F 10/16, G11B 5/127

(54) **Magnetic film for a magnetic device, magnetic head for a hard disk drive, and solid-state device**

(30) Priority: 12.08.2005 JP 2005234071
(71) Applicant: FUJITSU LIMITED, Kawasaki-shi, Kanagawa 211-8588 (JP)
(72) Inventor: Noma, Kenji, c/o Fujitsu Limited, Kawasaki-shi, Kanagawa 211-8588 (JP); Kanai, Hitoshi, c/o Fujitsu Limited, Kawasaki-shi, Kanagawa 211-8588 (JP); Matsuoka, Masaaki, c/o Fujitsu Limited, Kawasaki-shi, Kanagawa 211-8588 (JP)
(74) Representative: Fenlon, Christine Lesley

(57) **Abstract**

There is provided a magnetic material with a high saturation magnetization of 2.46 Teslas or above. By using this magnetic material in a recording head, it is possible to record information with a higher density on a recording medium. The magnetic material can also be applied to various kinds of solid-state devices. A magnetic film for a magnetic device (10) is composed of a multilayer film where ferromagnetic films and palladium films (12) or alloy films including palladium are alternately laminated. The laminated palladium films (12) or alloy films including palladium have a main crystal structure that is a body-centered cubic structure, and the multilayer film is formed by dry processing.

## Description

### BACKGROUND OF THE INVENTION

### 1. Field of the Invention

The present invention relates to a magnetic film for a magnetic device with high saturation magnetization, and to a magnetic head for a hard disk drive and a solid-state device that use the same.

### 2. Background Art

To raise the recording density of a hard disk drive, it is necessary to strengthen the magnetic field produced by a magnetic head. Most magnetic heads that are currently in use are constructed with a ferromagnetic body as a magnetic pole (core), produce an induction field by having a current flow through a coil wound so as to surround the magnetic pole, and focus the induction field inside the magnetic pole so that a strong write magnetic field is radiated in one direction.

When the strength of the induction field that can be produced by the coil is treated as constant, the only way to intensify the write magnetic field is to produce a head construction that raises the saturation magnetization of the magnetic pole and/or efficiently focuses the induction field.

As examples, the following materials have been proposed as high saturation magnetization materials suited to the above object: nickel-iron alloy (permalloy); an iron-aluminum-silicon alloy (sendust); amorphous alloys such as Fe-Co-Si-B; a cobalt-nickel-iron alloy; and a cobalt-iron alloy.

When recording heads for hard disk drives were first commercialized, Ni-Zn ferrite was used as the magnetic material. At that time, only magnetic tape was available as a magnetic recording medium, and Ni-Zn ferrite was used due to advantages such as its favorable abrasion resistance and corrosion resistance, as well as its high resistivity which prevents eddy currents from occurring. However, as a magnetic material, Ni-Zn ferrite has the disadvantage that the saturation magnetization is low at 0.4T (hereinafter, "T" stands for teslas).

On the other hand, although magnetic poles were manufactured at that time by machining, machining becomes increasingly difficult as the size of the head becomes smaller, and therefore Ni-Zn ferrite was replaced with metal materials such as permalloy for which photolithography can be used. Permalloy is a soft magnetic material that has been used since the 19^{th} Century, and since the corrosion resistance is relatively good and the saturation magnetization is higher than ferrite, permalloy was used after ferrite. However, since the saturation magnetization is still only 1.0T, before long the write magnetic field became insufficient, resulting in a gradual shift to materials with higher saturation magnetization.

At present, Fe₇₀Co₃₀ alloy is mainly used as the magnetic material since it has a maximum saturation magnetization of 2.45T when used alone. A material with a higher saturation magnetization than Fe₇₀Co₃₀ alloy has not been found. As one exception, experimental data about a film of the iron-nitrogen compound Fe₁₆N₂ that has a saturation magnetization of 2.8 to 3.0T has been reported (non-Patent Document 1), but at present, such values are viewed as suspicious and a value of 2.4T at most is considered more appropriate (non-Patent Document 2). This value is smaller than the saturation magnetization of 2.45T of Fe₇₀Co₃₀ alloy.

Note that as experiment data that resembles data for a magnetic film of the magnetic device according to an embodiment of the present invention, it has been reported that the saturation magnetization moment per atom of Fe or FeCo can be increased to a maximum of 10µB in a rare alloy where Fe is dispersed in Pd, a Fe/Pd multilayer film, or a FeCo/Pd multilayer film (the saturation magnetization moment per atom of Fe as a simple substance is 2.2µB, but 2.46µB for Fe₇₀Co₃₀). This is described as being caused by a phenomenon where magnetic moments increase at interfaces between the Fe atoms and the Pd atoms. However, when the entire material is considered to be a Fe-Pd alloy (or Fe-Co-Pd alloy) in the experimental data reported so far, since the percentage content of Pd is set much higher than the percentage content of Fe, the overall value for the saturation magnetization becomes extremely low, which makes such material commercially unsuited to use as a magnetic material. In addition, in either case, the high saturation magnetization was observed at around 4.2K that is the boiling point of liquid helium, and there have been no reports of the saturation magnetization moments increasing at room temperature.

It should be noted that Patent Document 1 filed by the present applicant in 2004 discloses that an alloy film including Fe, Co, and Pd exhibits superior saturation magnetization to the Fe₇₀Co₃₀ in a suitable range of composition. The document states that by forming an alloy of Pd and Fe, the magnetic moments of the Fe atoms are excited, thereby raising the overall saturation magnetization.
Non-Patent Document 1
M.Komuro et al., Journal of Applied Physics, vol.67, No.9, pp.5126 (1990)
Non-Patent Document 2
M.Takahashi et al., Journal of Applied Physics, vol.79, No.8, pp.5546 (1996)
Non-Patent Document 3
Physical Review, vol.125, No.2, pp.541 (1962)
Non-Patent Document 4
Journal of Applied Physics, vol.77, No.8, pp.3965 (1995)
Non-Patent Document 5
IEEE Transactions on Magnetism, vol.28, No.5, pp.2766 (1992)
Non-Patent Document 6
Journal of Applied Physics, vol.92, No.5, pp.2634 (2002)
Patent Document 1
Japanese Patent Application No. 2004-168502

To improve the recording density of a hard disk drive, it is effective to use a high saturation magnetization material in the magnetic head. However, as described above, the material with the highest saturation magnetization in current use is Fe₇₀Co₃₀ that has a saturation magnetization of 2.45T, with there being no known material with a higher saturation magnetization.

### SUMMARY OF THE INVENTION

Accordingly, it is desirable to provide a magnetic material with a saturation magnetization of 2.46T or above, that is, a saturation magnetization higher than that of the previously-proposed Fe₇₀Co₃₀ alloy, and can stand up to commercialization.

Accordingly, a magnetic film for a magnetic device embodying the present invention is composed of a multilayer film where ferromagnetic films and palladium films or alloy films including palladium are alternately laminated, wherein a thickness of the laminated palladium films or alloy films including palladium is at least 0.05nm, and the multilayer film is formed by dry processing. Another magnetic film for a magnetic device according to an embodiment of the present invention is composed of a multilayer film where ferromagnetic films and palladium films or alloy films including palladium are alternately laminated, wherein the laminated palladium films or alloy films including palladium have a main crystal structure that is a body-centered cubic structure, and the multilayer film is formed by dry processing. Yet another magnetic film for a magnetic device according to an embodiment of the present invention is composed of a multilayer film where ferromagnetic films and palladium films or alloy films including palladium are alternately laminated, wherein the saturation magnetization of the ferromagnetic films is at least 2.46 teslas, and the multilayer film is formed by dry processing. Yet another magnetic film for a magnetic device according to an embodiment of the present invention is composed of a multilayer film where ferromagnetic films and rhodium films or alloy films including rhodium are alternately laminated, wherein a thickness of the laminated rhodium films or alloy films including rhodium is in a range of 0.1nm to 0.4nm, inclusive, and the multilayer film is formed by dry processing. Yet another magnetic film for a magnetic device according to an embodiment of the present invention is composed of a multilayer film where ferromagnetic films and alloy films are alternately laminated, wherein the alloy films include at least one element selected from titanium, vanadium, chromium, manganese, nickel, copper, zirconium, niobium, molybdenum, ruthenium, silver, hafnium, tantalum, tungsten, rhenium, osmium, iridium, platinum, and gold, and the multilayer film is formed by dry processing.

Also, the alloy films or multilayer films described above may be formed on an underlayer whose crystal structure is a body-centered cubic structure.

In addition, the underlayer may be composed of a metal chosen from chromium, vanadium, molybdenum, niobium, tungsten, and nickel with a body-centered cubic structure, an alloy including at least two of the metals, or an alloy produced by adding titanium or nickel to the alloy.

The ferromagnetic films may be composed of iron-cobalt or an alloy that includes iron-cobalt where a ratio (C_{Fe}/C_{Co}) of respective mole percentage contents of iron and cobalt is in a range of 0.667 to 9.0, inclusive.

Also, the ferromagnetic films may be composed of an alloy including iron-cobalt and one of palladium, rhodium, and platinum.

The multilayer film may be formed using dry processing, that is, any of sputtering, vacuum deposition, and chemical vapor deposition.

A recording head for a hard disk drive according to an embodiment of the present invention uses a magnetic film for a magnetic device that is composed of a multilayer film where ferromagnetic films and rhodium films or alloy films including rhodium are alternately laminated, wherein a thickness of the laminated rhodium films or alloy films including rhodium is in a range of 0.1nm to 0.4nm, inclusive, and the multilayer film is formed by dry processing.

A solid-state device according to an embodiment of the present invention uses a magnetic film for a magnetic device where ferromagnetic films and rhodium films or alloy films including rhodium are alternately laminated, wherein a thickness of the laminated rhodium films or alloy films including rhodium is in a range of 0.1nm to 0.4nm, inclusive, and the multilayer film is formed by dry processing.

The magnetic film for a magnetic device according to an embodiment of the present invention provides a magnetic film with a higher saturation magnetization than Fe₇₀Co₃₀ alloy that at 2.45T is the magnetic material with the highest previously known saturation magnetization. By doing so, the magnetic film for a magnetic device can be applied in a magnetic head for a hard disk drive capable of high-density recording and a solid-state device capable of high-density recording.

### BRIEF DESCRIPTION OF THE DRAWINGS

The aforementioned will become apparent to those skilled in the art upon reading and understanding the following detailed description with reference to the accompanying drawings.

In the drawings:
FIG. 1 is a diagram useful in explaining a film construction of a magnetic film for a magnetic device formed as a multilayer film;
FIG. 2 is a graph showing results of measuring the saturation magnetization of a magnetic film for a magnetic device that is a multilayer film where ferromagnetic films and palladium films are alternately laminated, for a case where the thickness of the palladium films is varied;
FIG. 3 is a graph showing results of measuring the saturation magnetization of a magnetic film for a magnetic device that is a multilayer film where the ferromagnetic films and the palladium films are alternately laminated, for a case where the thickness of the ferromagnetic films is varied;
FIG. 4 is a graph showing results of measuring the saturation magnetization of a magnetic film for a magnetic device that is a multilayer film where the ferromagnetic films and rhodium films are alternately laminated, for a case where the thickness of the rhodium films is varied;
FIG. 5 is a diagram useful in explaining the construction of a magnetic head that uses the magnetic film for a magnetic device;
FIG. 6 is a diagram useful in explaining an example construction of a solid-state device; and
FIG. 7 is a diagram useful in explaining another example construction of a solid-state device.

### DESCRIPTION OF THE PREFERRED EMBODIMENTS

A magnetic film for a magnetic device according to an embodiment of the present invention, and a magnetic head for a hard disk drive and a solid-state device that use the same will now be described.

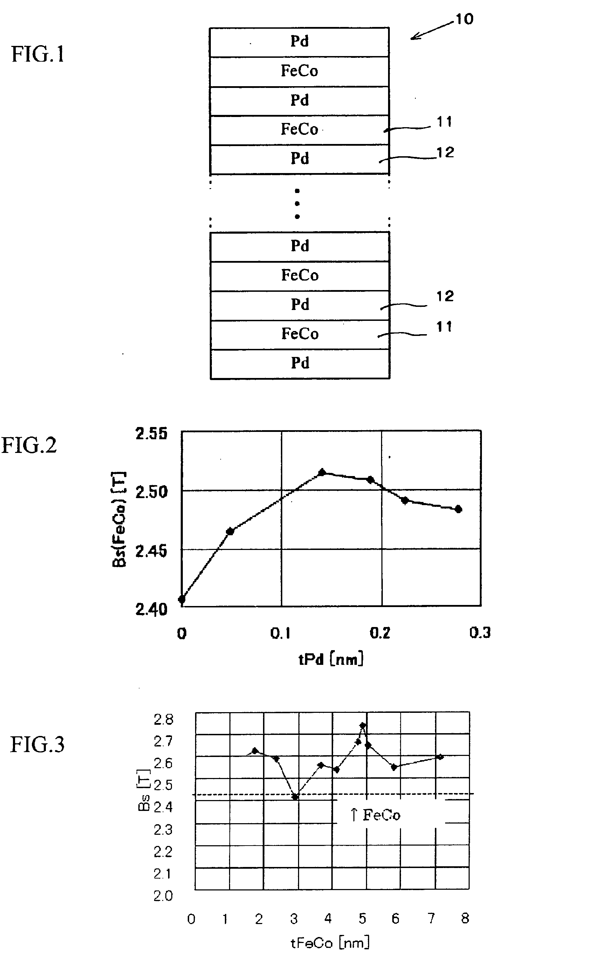

FIG. 1 shows a magnetic film for a magnetic device 10 according to an embodiment of the present invention. The magnetic film for a magnetic device 10 is a multilayer film produced by alternately laminating ferromagnetic films 11 composed of iron-cobalt as ferromagnetic films and palladium films 12. The film shown in FIG. 1 is formed by sputtering by alternately discharging targets for FeCo and Pd inside the same vacuum chamber.

Also, the main crystal structure in the multilayer film that composes the magnetic film for a magnetic device 10 is a body-centered cubic structure.

To encourage the growth of crystals with a body-centered cubic structure, forming the FeCo/Pd multilayer film on an underlayer with a suitable crystal structure is extremely effective in realizing high saturation magnetization. As the material of the underlayer for the FeCo/Pd multilayer film, it is understood that it is effective to use chromium, vanadium, molybdenum, niobium, or tungsten with a body-centered cubic structure, or an alloy of the same. It is also understood that to alleviate mismatching of the crystal lattice with the FeCo/Pd multilayer film, it is effective to add titanium and/or nickel to the underlayer, with a chromium-nickel alloy with suitable relative proportions being especially effective.

FIG. 2 shows the results of measuring the saturation magnetization Bₛ of the multilayer film that composes the magnetic film for a magnetic device 10 when the thickness of the FeCo layers is fixed at 1.7nm and the thickness of the Pd layers is varied in a range of 0 to 0.28nm, inclusive. The measurement results shown in FIG. 2 show that although the saturation magnetization Bₛ of a FeCo film not produced as a multilayer film with Pd is 2.41T, the saturation magnetization Bₛ rises to 2.52T for a multilayer film where the Pd layers are 0.14nm thick.

FIG. 3 shows the results of measuring the saturation magnetization Bₛ of a multilayer film where the thickness of the Pd layers is fixed and the thickness of the FeCo layers is changed in a range of 1.7 to 7.2nm, inclusive. The measurement results shown in FIG. 3 show that although the saturation magnetization Bₛ of a FeCo film not produced as a multilayer film with Pd is 2.41T, the saturation magnetization Bₛ rises to 2.74T for a multilayer film where the Pd layers are 0.14nm thick and the FeCo layers are 4.9nm thick.

This increase in the saturation magnetization Bₛ in the FeCo/Pd multilayer cannot be explained by just the increase in the saturation magnetization moment µ_{B} that occurs in a rare metal alloy where Fe is dispersed in Pd. In the magnetic film for a magnetic device according to the present embodiment, it is assumed that this increase is the result of the Pd extending the FeCo crystal lattice and thereby changing the electronic state.

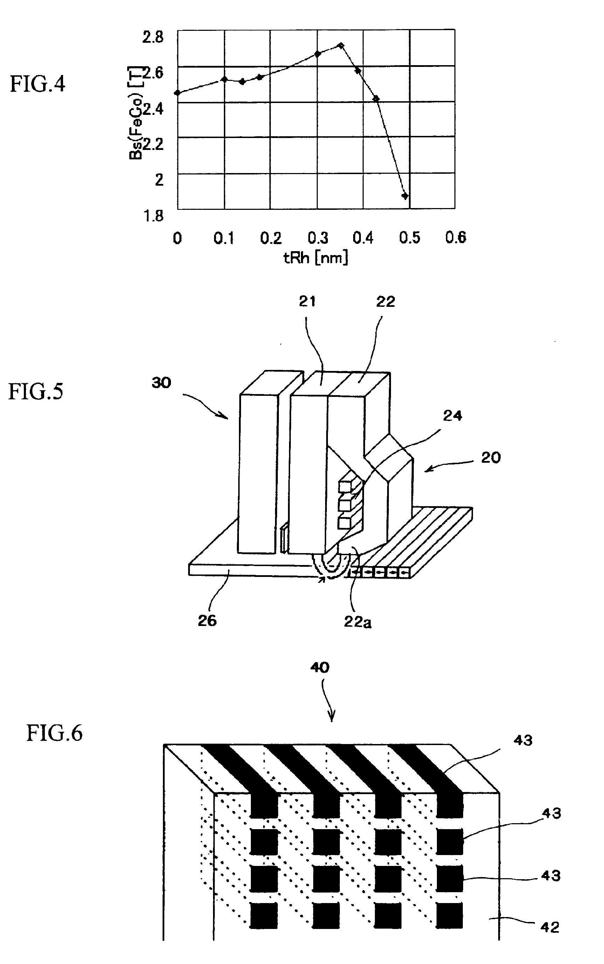

Also, the same increase in saturation magnetization is obtained for metal or alloy film aside from Pd. FIG. 4 shows the saturation magnetization Bₛ of an FeCo/Rh multilayer film where the thickness of the FeCo layers is fixed at 1.7nm and the thickness of the Rh layers is varied in a range of 0 to 0.49nm, inclusive. The measurement results shown in FIG. 4 show that although the saturation magnetization Bₛ of a FeCo film not produced as a multilayer film with Rh is 2.44T, the saturation magnetization Bₛ rises for a multilayer film where the thickness of the Rh layers is 0.1 to 0.4nm, inclusive. In particular, a saturation magnetization of 2.7T was achieved when the Rh layers are 0.35nm thick.

The above results are believed to be caused by changes to the crystal structure of a FeCo layer that are caused by producing a multilayer structure with Rh in the same way for Pd described above. This means that there are combinations whereby producing a multilayer structure from FeCo and a metal or alloy with a different crystal structure or length of crystal lattice to FeCo causes an increase in saturation magnetization. Suitable examples of the metal or alloy mentioned above are materials including one or more elements selected from titanium, vanadium, chromium, manganese, nickel, copper, zirconium, niobium, molybdenum, ruthenium, silver, hafnium, tantalum, tungsten, rhenium, osmium, iridium, platinum, and gold.

Dry processing methods are suitable as the method of forming the magnetic film for a magnetic device according to an embodiment of the present invention. Aside from the sputtering described above, the dry processing methods referred to here include vacuum deposition, chemical vapor deposition, or equivalent methods.

When sputtering is used, when repeatedly laminating the palladium films or palladium alloy films, or the ferromagnetic films, it is possible to precisely control even extremely thin thicknesses in a range of 0.05nm to 0.28nm, inclusive. In particular, in a magnetic film for a magnetic device formed of a multilayer film according to an embodiment of the present invention, in principle the interfaces between the palladium films or palladium alloy films and the ferromagnetic films need to be formed extremely steeply, with sputtering being suited to forming such interfaces.

It is also possible to control extremely thin thicknesses using vacuum deposition.

It is also possible to control extremely thin thicknesses by reducing the pressure in the reaction chamber during chemical vapor deposition.

It should be noted that although plating is mainly used at present to produce the magnetic film used on a magnetic pole of a magnetic head for a hard disk drive, plating is not suited to forming the magnetic film according to an embodiment of the present invention. Plating methods are wet processes where the growth speed for films is fast, and are therefore unsuited to repeatedly laminating extremely thin layers. In particular, when the plating bath is changed to switch between film materials, the metal that has already been deposited as films will melt once again in the bath, resulting in unintended mixed layers being formed at the interfaces, which weakens the saturation magnetization increasing effect obtained with an embodiment of the present invention.

Since the magnetic film for a magnetic device described above has a high saturation magnetization, the magnetic film for a magnetic device can be favorably used in a magnetic head for a hard disk drive, a solid-state device, or the like.

FIG. 5 shows an example structure of a magnetic head for a hard disk drive 30. The magnetic head 30 shown in FIG. 5 is an example constructed for "in-plane recording", includes a lower magnetic pole 21 and an upper magnetic pole 22 as a magnetic head part 20, and has a coil 24 disposed so as to be interlinked to a core part 22a.

By forming the Fe₇₀Co₃₀/Pd multilayer film described above by sputtering on the lower magnetic pole 21 that composes the magnetic head part 20, it is possible to form the magnetic film for a magnetic device 10 according to an embodiment of the present invention on the lower magnetic pole 21.

Since the magnetic film for a magnetic device according to an embodiment of the present invention has a saturation magnetization of 2.45T or higher that is superior to Fe₇₀Co₃₀ alloy that is the most common core magnetic pole material in previously-proposed use, by using the magnetic film on the lower magnetic pole 21, it is possible to effectively improve the write magnetic field strength, and therefore it becomes possible to increase the write density on a recording medium 26.

It should be obvious that aside from use as the lower magnetic pole 21 of the magnetic head 30, the magnetic film for a magnetic device according to an embodiment of the present invention can be used as a magnetic pole material that composes the upper magnetic pole 22.

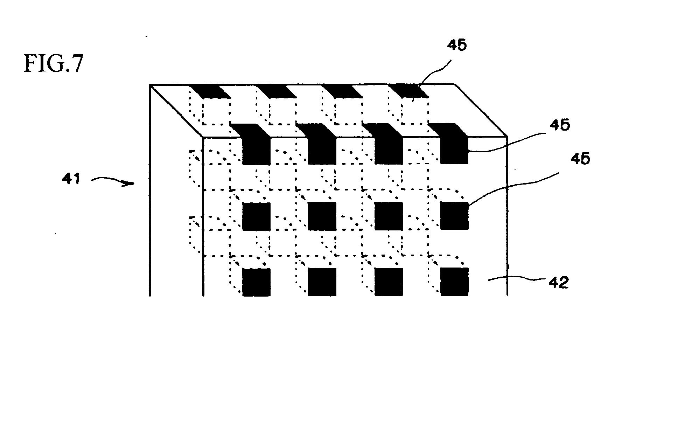

FIGS. 6 and 7 show examples where the magnetic film for a magnetic device according to an embodiment of the present invention is used in solid-state devices. In more detail, FIG. 6 shows a solid-state device 40 where quantum wires 43 composed of iron-cobalt in the form of thin wires are arranged at predetermined intervals on a base part 42 composed of palladium. FIG. 7 shows a solid-state device 41 where quantum dots 45 composed of iron-cobalt in the form of dots are arranged at predetermined intervals on a base part 42 composed of palladium. These solid-state devices 40, 41 can be fabricated by alternately depositing or sputtering palladium layers and ferromagnetic layers composed of iron-cobalt using a mask.

The solid-state devices 40, 41 shown in FIGS. 6 and 7 can be used as devices for magnetic recording, and in particular by including the construction of the magnetic film for a magnetic device 10 described above that is formed as a multilayer film, since an extremely high saturation magnetization can be achieved, the solid-state devices 40, 41 can be used effectively for recording information with high density. In particular, it is believed that the saturation magnetization per unit volume of the magnetic body will increase in keeping with the extent to which a dot construction such as the solid-state device 41 shown in FIG. 7 is used.

## Claims

1. A magnetic film for a magnetic device that is composed of a multilayer film where ferromagnetic films and palladium films or alloy films including palladium are alternately laminated, wherein a thickness of the laminated palladium films or alloy films including palladium is at least 0.05nm and the multilayer film is formed by dry processing.

2. A magnetic film for a magnetic device that is composed of a multilayer film where ferromagnetic films and palladium films or alloy films including palladium are alternately laminated, wherein the laminated palladium films or alloy films including palladium have a main crystal structure that is a body-centered cubic structure and the multilayer film is formed by dry processing.

3. A magnetic film for a magnetic device according to Claim 2, wherein the multilayer film is formed on an underlayer whose crystal structure is a body-centered cubic structure.

4. A magnetic film for a magnetic device according to Claim 3, wherein the underlayer is composed of a metal chosen from chromium, vanadium, molybdenum, niobium, tungsten, and nickel with a body-centered cubic structure, an alloy including at least two of the metals, or an alloy produced by adding titanium or nickel to the alloy.

5. A magnetic film for a magnetic device that is composed of a multilayer film where ferromagnetic films and palladium films or alloy films including palladium are alternately laminated, wherein the saturation magnetization of the ferromagnetic films is at least 2.46 teslas, and the multilayer film is formed by dry processing.

6. A magnetic film for a magnetic device that is composed of a multilayer film where ferromagnetic films and rhodium films or alloy films including rhodium are alternately laminated, wherein a thickness of the laminated rhodium films or alloy films including rhodium is in a range of 0.1nm to 0.4nm, inclusive, and the multilayer film is formed by dry processing.

7. A magnetic film for a magnetic device that is composed of a multilayer film where ferromagnetic films and alloy films are alternately laminated, wherein the alloy films include at least one element selected from titanium, vanadium, chromium, manganese, nickel, copper, zirconium, niobium, molybdenum, ruthenium, silver, hafnium, tantalum, tungsten, rhenium, osmium, iridium, platinum, and gold, and the multilayer film is formed by dry processing.

8. A magnetic film for a magnetic device according to Claim 6, wherein a main crystal structure of the multilayer film is a body-centered cubic structure.

9. A magnetic film for a magnetic device according to Claim 6 or 8, wherein the multilayer film is formed on an underlayer whose crystal structure is a body-centered cubic structure.

10. A magnetic film for a magnetic device according to Claim 9, wherein the underlayer is composed of a metal chosen from chromium, vanadium, molybdenum, niobium, tungsten, and nickel with a body-centered cubic structure, an alloy including at least two of the metals, or an alloy produced by adding titanium or nickel to the alloy.

11. A magnetic film for a magnetic device according to Claim 6, 8, 9 or 10, wherein the ferromagnetic films are composed of iron-cobalt or an alloy that includes iron-cobalt and a ratio (C_{Fe}/C_{Co}) of respective mole percentage contents of iron and cobalt is in a range of 0.667 to 9.0, inclusive.

12. A magnetic film for a magnetic device according to Claim 6, 8, 9, 10 or 11, wherein the ferromagnetic films are composed of an alloy including iron-cobalt and one of palladium, rhodium, and platinum.

13. A magnetic film for a magnetic device according to Claim 6, 8, 9, 10, 11 or 12, wherein sputtering is used as the dry processing.

14. A magnetic film for a magnetic device according to Claim 6, 8, 9, 10, 11 or 12, wherein vacuum deposition is used as the dry processing.

15. A magnetic film for a magnetic device according to Claim 6, 8, 9, 10, 11 or 12, wherein chemical vapor deposition is used as the dry processing.

16. A recording head for a hard disk drive that uses a magnetic film for a magnetic device that is composed of a multilayer film where ferromagnetic films and rhodium films or alloy films including rhodium are alternately laminated, wherein a thickness of the laminated rhodium films or alloy films including rhodium is in a range of 0.1nm to 0.4nm, inclusive, and the multilayer film is formed by dry processing.

17. A solid-state device that uses a magnetic film for a magnetic device that is composed of a multilayer film where ferromagnetic films and rhodium films or alloy films including rhodium are alternately laminated, wherein a thickness of the laminated rhodium films or alloy films including rhodium is in a range of 0.1nm to 0.4nm, inclusive, and the multilayer film is formed by dry processing.
